(19) Europäisches Patentamt
European Patent Office
Office européen des brevets

(11) Veröffentlichungsnummer: **0 244 617 A1**

(12) **EUROPÄISCHE PATENTANMELDUNG**

(21) Anmeldenummer: **87104379.0**

(22) Anmeldetag: **25.03.87**

(51) Int. Cl.⁴: **C 08 K 5/08**, C 08 L 83/04, H 01 B 3/46, C 10 M 129/24

(30) Priorität: **05.04.86 DE 3611504**

(43) Veröffentlichungstag der Anmeldung: **11.11.87 Patentblatt 87/46**

(84) Benannte Vertragsstaaten: **BE CH DE FR GB IT LI NL**

(71) Anmelder: **BAYER AG, Konzernverwaltung RP Patentabteilung, D-5090 Leverkusen 1 Bayerwerk (DE)**

(72) Erfinder: **Steinbach, Hans-Horst, Dr., Im Birkelshof 1, D-5060 Bergisch Gladbach 2 (DE)**
Erfinder: **Preiss, Peter, Gellertweg 22, D-5600 Wuppertal 1 (DE)**
Erfinder: **Schnurrbusch, Karl, Dr., Kurt-Schumacher-Ring 154, D-5090 Leverkusen (DE)**

(54) **Polysiloxane mit verbesserter Alterungsstabilität.**

(57) Organopolysiloxane mit verbesserter Alterungsstabilität. Sie weisen einen Gehalt an substituierten Anthrachinonverbindungen auf.

EP 0 244 617 A1

BAYER AKTIENGESELLSCHAFT 5090 Leverkusen, Bayerwerk
Konzernverwaltung RP
Patentabteilung Br/by-c

BEZEICHNUNG GEÄNDERT, siehe Titelseite

Alterungsstabile Polyorganosiloxane

Die vorliegende Erfindung betrifft Polyorganosiloxane mit verbesserter Alterungsstabilität, die z.B. in elektrischen Vorrichtungen, hydraulischen Systemen oder Wärmeübertragungsanlagen zum Einsatz kommen können. Besondere Bedeutung hat diese Erfindung für elektrische Vorrichtungen, die flüssige Polyorganosiloxane als isolierende Kühlmedien enthalten.

Als flüssige Isoliermedien in elektrischen Vorrichtungen, die in Bereichen hoher Brandgefährdung installiert sind, wurden bisher polychlorierte Biphenyle (PCB) verwendet, die als Vorzüge neben ihrer schweren Entflammbarkeit eine hohe Alterungsstabilität aufweisen. Aufgrund verschiedener Umweltfaktoren haben diese Verbindungen jedoch an Interesse eingebüßt und werden in zunehmendem Maße durch andere Flüssigkeiten substituiert. Unter diesen Flüssigkeiten kommt den Polyorganosiloxanen wegen ihrer hervorragenden elektrischen, ökologischen und brandtechnischen Eigenschaften, eine besondere Bedeutung zu (vgl. z.B. Dirnböck, Preiss, Schiffer, Schmitz: "Der Silikontransformator im Brandgeschehen", etz 16/1984).

Aus der Vielzahl möglicher Polyorganosiloxane sind bevorzugt Polydimethylsiloxane im Einsatz, deren Anforderungsprofil im IEC-Dokument 10 B (Sec) 46 (April 82) festgelegt worden ist.

Diese Silikonflüssigkeiten werden bereits in großem Umfang nach den üblichen Verfahren hergestellt und vertrieben.

Trotzdem Silikonverbindungen allgemein als wärme- und alterungsstabil gelten, kann bei sehr langer thermischer Beanspruchung dieser Verbindungen in Luft eine Veränderung festgestellt werden, deren Ursache auf eine Oxidation der Methylgruppen zurückzuführen ist.

Es sind bereits eine Vielzahl von Verfahren beschrieben worden, die eine Stabilisierung der Polyorganosiloxane zum Inhalt haben. Als wirksame Zusätze sind z.B. Metallverbindungen, so z.B. Metallsalze organischer Säuren (US-PS 24 45 567), Metallchelate (US-PS 24 65 296) und Ferrocen (DE-AS 11 16 396) vorgeschlagen worden.

Bei allen diesen Systemen ist eine Verwendung in elektrischen Vorrichtungen problematisch, weil durch metallhaltige Stabilisierungszusätze das dielektrische Verhalten des Isoliersystems nachteilig beeinflußt werden kann.

Daher ist es wünschenswert, eine Stabilisierungsmethode anzustreben, die einerseits eine Verbesserung des Alterungsverhaltens bewirkt, auf der anderen Seite jedoch das dielektrische Eigenshaftsbild des Silicons nicht nennenswert verändert.

Es wurde nun gefunden, daß sich die Alterungsstabilität von flüssigen Polyorganosiloxanen dadurch verbessern läßt, daß man eine 0,001 bis 0,05 Gew.-% betragende Menge substituierter Anthrachinonverbindungen, insbesondere solche der Formel

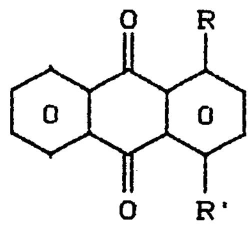

in diese Siloxane einarbeitet, worin R und R' Wasserstoffreste, Aminogruppen oder substituierte Aminogruppen, wie z.B. Alkylamino-, Alkenylamino- oder Arylaminoreste sein können. Dabei sind R und R' nicht gleichzeitig Wasserstoffreste.

Bevorzugt wird die Anthrachinonverbindung in Mengen von 0,005 - 0,03 Gew.-% eingesetzt.

Gegenstand der vorliegenden Erfindung sind Organopolysiloxane mit verbesserter Alterungsstabilität, welche dadurch gekennzeichnet sind, daß sie einen Gehalt an substituierten Anthrachinonverbindungen aufweisen.

Insbesondere sind Gegenstand der Erfindung Organopolysiloxane die einen Gehalt von 0,001 bis 0,05 Gew.-% - bezogen auf die Gesamtmenge - an Anthrachinonverbindungen der allgemeinen Formel

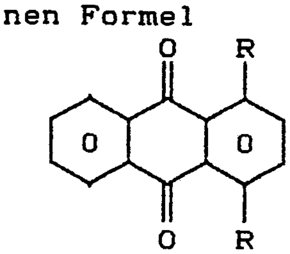

wobei R unabhängig voneinander für Wasserstoff, Aminogruppen und substituierte Aminogruppen stehen kann, aufweisen. Beide R sind jedoch nicht gleichzeitig Wasserstoffreste.

Anthrachinonverbindungen finden hauptsächlich als Farbstoffe Verwendung und zeigen beim erfindungsgemäßen Einsatz keinerlei negative Effekte in bezug auf das dielektrische Eigenschaftsbild der Polyorganosiloxane.

Als Silikonflüssigkeiten kommen in erster Linie lineare oder gegebenenfalls auch verzweigte Polydimethylsiloxane mit einer Viskosität von 0,65 $mm^2 \cdot sec^{-1}$ bis ca. 20 000 000 $mm^2 \cdot sec^{-1}$ infrage. Anstelle der Methylsubstituenten können auch andere Organogruppen wie z.B. Ethyl-, Vinyl-, Phenylrest oder auch Wasserstoff vorliegen.

In gleicher Weise können Polysiloxansysteme erfindungsgemä stabilisiert werden, die Polysiloxane enthalten, die bis zu einem gewissen Anteil vernetzte Einheiten aufweisen.

Die genannten Systeme werden z.B. als Elektroisolierflüssigkeiten, als Hydraulikmedien, als Schmiermittel, als Dämpfungsflüssigkeiten, als Bremsflüssigkeiten, als Wärmeüberträger- oder Kraftübertragungssysteme eingesetzt.

Zur Bewertung der Alterungsstabilität von Polyorganosiloxanen bietet sich die Bestimmung der Gelzeit an. Man versteht hierunter die Zeit, die erforderlich ist, eine Probe bei einer bestimmten Temperatur in Luft solange zu tempern, bis sie durch oxidative Vorgänge soweit verändert worden ist, daß sie unter dem Einfluß der Schwerkraft nicht mehr fließt.

Die nachstehend aufgeführten Beispiele sollen nun die Wirksamkeit der erfindungsgemäßen Zusätze in Polyorganosiloxanen verdeutlichen.

Beispiel 1

In Polydimethylsiloxanölen mit einer Viskosität von 50 $mm^2 \cdot s^{-1}$ bei $25^0$C wurden jeweils 0,01 Gew.-% der folgenden Anthrachinonverbindungen eingerührt.

Tabelle 1

| verwendete Anthrachinonverbindungen | | |
|---|---|---|
| Nr. 1 | Anthrachinon | |
| Nr. 2 | 1-Aminoanthrachinon | |
| Nr. 3 | 1,4-Diamino-anthrachinon | |
| Nr. 4 | 1,4-Bis-isobutylamino-anthrachinon | |
| Nr. 5 | 1,4-Bis-3-methyl-1(2-phenyl-ethyl)-butyl-amino-anthrachinon | * |
| Nr. 6 | 1,4-Bis-methylamino-anthrachinon | * |
| Nr. 7 | 1,4-Bis-(2-hydroxyethylamino)-anthrachinon | * |
| Nr. 8 | 1-(3-Dimethylaminopropylamino)-4-methylamino-anthrachinon | |
| Nr. 9 | 1-Amino-4-methylamino-anthrachinon | * |
| Nr. 10 | 1-(4-Methyl-phenylamino)-anthrachinon | |
| Nr. 11 | 1,4-Bis-(4-methyl-phenylamino)-anthrachinon | * |
| Nr. 12 | 1,4-Bis-(2,6-diethyl-4-methyl-phenyl-amino)-anthrachinon | |
| Nr. 13 | 1,4-Bis-(4-tert.-butyl-phenyl-amino)-anthrachinon | |
| Nr. 14 | 1,4-Bis-(4-cyclohexyl-phenyl-amino)-antrachinon | * |
| Nr. 15 | 1-Amino-4-phenylamino-anthrachinon | * |
| Nr. 16 | 1-Amino-4-cyclohexylamino-antrachinon | * |

| verwendete Anthrachinonverbindungen | | |
|---|---|---|
| Nr. 17 | 1-Methylamino-4-(3-methyl-phenylamino)-anthrachinon | |
| Nr. 18 | 1-Methylamino-4-(4-methyl-phenylamino)-anthrachinon | |
| Nr. 19 | 1-(4-Amino-phenylamino)-4-methylamino-anthrachinon | * |
| Nr. 20 | 1-(4-Methoxy-phenylamino)-4-methylamino-anthrachinon | * |
| Nr. 21 | 1-(3-dimethylaminopropylamino)-4-(4-methyl-phenylamino)-antrachinon | |

* Verbindung war nur teilweise löslich

Da eine völlige Löslichkeit einzelner Verbindungen in dem verwendeten Silikonöl nicht in allen Fällen gegeben war, wurden die betreffenden Proben vom unlöslichen Anteil abdekantiert und dann als gesättigte Lösungen zusammen mit den Proben der löslichen Verbindungen, deren Löslichkeitsgrenzen alle im Bereich von etwa 0,02 - 0,05 Gew.-% lagen, auf ihre Alterungsbeständigkeit untersucht. Die Prüfung erfolgte in 50 ml Bechergläsern, in denen jeweils 20 g der betreffenden Proben bei 225°C solange getempert wurden, bis Vergelung eintrat. In Tabelle 2 sind die ermittelten Gelzeiten aufgeführt.

Tabelle 2

Gelzeiten von Polydimethylsiloxanölen (PDMS) mit Zusätzen verschiedener Anthrachinonverbindungen

| mit Zusatz | Gelzeit (Tage) |
|---|---|
| Nr. 1 | 8 - 12 |
| Nr. 2 | 8 - 12 |
| Nr. 3 | 12 - 16 |
| Nr. 4 | 20 - 24 |
| Nr. 5 | 12 - 16 |
| Nr. 6 | 20 - 24 |
| Nr. 7 | 16 - 20 |
| Nr. 8 | 20 - 24 |
| Nr. 9 | 24 - 28 |
| Nr. 10 | 12 - 16 |
| Nr. 11 | 40 - 48 |
| Nr. 12 | 8 - 12 |
| Nr. 13 | 40 - 48 |
| Nr. 14 | 36 - 40 |
| Nr. 15 | 32 - 36 |
| Nr. 16 | 24 - 28 |
| Nr. 17 | 40 - 48 |
| Nr. 18 | 40 - 48 |
| Nr. 19 | 32 - 36 |
| Nr. 20 | 32 - 36 |
| Nr. 21 | 32 - 36 |
| PDMS ohne Zusatz | 8 - 12 |

Beispiel 2

Zur Feststellung, ob die erfindungsgemäßen Anthrachinonverbindungen auch auf andere Systeme als Polydimethylsiloxane stabilisierend wirken, wurde jeweils 0,01 Gew.-% 1-Methylamino-4-(3-methyl-phenylamino)-anthrachinon in den in Tabelle 3 aufgeführten Polyorganosiloxanen gelöst und dann 20 g dieser Proben in 50 ml Bechergläsern bei 225° C im Vergleich mit undotierter Ware bis zur Vergelung getempert.

Tabelle 3

Verwendete Polyorganosiloxane

| | |
|---|---|
| Öl Nr. 1 | Polymethylsiloxidimethylsiloxitrimethylsiloxisiloxan Viskosität von 20 $mm^2 \cdot s^{-1}$ bei 25° C |
| Öl Nr. 2 | Polydiethylsiloxan einer Viskosität von 35 $mm^2 \cdot s^{-1}$ bei 25° C |
| Öl Nr. 3 | Polymethylphenylsiloxan einer Viskosität von 200 $mm^2 \cdot s^{-1}$ bei 25° C |

In Tabelle 4 sind die herbei erhaltenen Ergebnisse zusammengefaßt.

Tabelle 4

Gelzeiten verschiedener Polyorganosiloxane mit 0,01 Gew.-% 1-Methylamino-4-(3-methyl-phenylamino)-anthrachinon

| | Gelzeit (Tage) | |
|---|---|---|
| Öl Nr. 1 undotiert | 8 - 12 | |
| Öl Nr. 1 dotiert | 40 - 48 | |
| Öl Nr. 2 undotiert | 2 - 3 | |
| Öl Nr. 2 dotiert | 3 - 4 | |
| Öl Nr. 3 undotiert | 6 - 8 | * |
| Öl Nr. 3 dotiert | 10 - 12 | * |

* die Prüfung der Polymethylphenylsiloxane wurde aufgrund der verbesserten Wärmebeständigkeit dieser Stoffklasse bei 300° C durchgeführt.

Beispiel 3

In einer handelsüblichen Isolierflüssigkeit (Viskosität ca. 50 $mm^2 \cdot sec^{-1}$), auf der Basis eines Polydimethylsiloxans mit einem Eigenschaftsbild gemäß IEC 10 B (sec) 46 wurden bei Raumtemperatur jeweils Mengen von 0,001; 0,002; 0,005; 0,01 und 0,02 Gew.-% 1-m-tolylamino-4-methylamino-antrachinon bis zur Homogenität aufgelöst, wobei Lösungen unterschiedlich blauer Intensität erhalten wurden.

Jeweils 20 g dieser Lösungen wurden dann in 50 ml-Bechergläsern bei 225°C bis zur Vergelung getempert, wobei als Standard die verwendete Isolierflüssigkeit ohne den erfindungsgemäßen Zusatz diente. In Tabelle 5 sind die gefundenen Gelzeiten zusammengefaßt.

Tabelle 5

Gelzeiten der Proben mit unterschiedlichen Gehalten an 1-m-tolylamino-4-methylaminoanthrachinon bei 225°C

| Konzentration (Gew.-%) | Gelzeit (Tage) |
|---|---|
| 0 | 10 - 12 |
| 0,001 | 10 - 12 |
| 0,002 | 18 - 22 |
| 0,005 | 30 - 34 |
| 0,01 | 40 - 44 |
| 0,02 | 40 - 44 |

Als weitere Methode speziell zur Überprüfung der Alterungsstabilität von Isolationsflüssigkeiten auf der Basis von Polydimethylsiloxanen kann auch der Ageing-Test gemäß IEC-Dokument 10 B (Secretariat) 53, June 1984, herangezogen werden, ein Verfahren bei dem die betreffende Flüssigkeit in einem Prüfgefäß 24 Std. auf 225°C erhitzt und anschließend die Viskositätsänderung gemessen wird. Da nach 24 Std. Erhitzungsdauer bei 225°C eine nach dem Stand der Technik hergestellte Isolationsflüssigkeit auf

der Basis von Polydimethylsiloxanen nur wenig altert, wurden die Testbedingungen entsprechend verschärft und die Zeit der Exposition auf 14 Tage ausgedehnt.

Nach diesem Zeitraum hat sich eine nicht mit dem erfindungsgemäßen Zusatz an Alterungsschutzmittel versehene Isolationsflüssigkeit durch Oxidationsprozesse in ihrer chemischen Struktur bereits merklich verändert.

<u>Beispiel 4</u>

Unter Zugrundelegung dieser Methode wurden in einem 1000 ml Becherglas mit einem Durchmesser von 100 mm 800 g einer mit 0,005 Gew.-% 1-Methylamino-4-(3-methylphenylamino)-anthrachinon dotierten Polydimethylsiloxanflüssigkeit gemäß IEC 10 B (Sec) 46  14 Tage bei 225°C getempert, anschließend die relevanten Werte an dieser Probe gemessen und mit den Daten der ungetemperten und auch der undotierten Ausgangsware verglichen. Die entsprechenden Ergebnisse sind in Tabelle 6 zusammengefaßt.

Tabelle 6

| | Viskosität bei 25°C gemäß ISO 3104 ($mm^2 \cdot s^{-1}$) | Durchschlagsspannung gemäß IEC 156 (kV) | Spez. Durchgangswiderstand gemäß IEC 247/93 (Ω.cm) bei 90°C | Dielektrizitätszahl bei 50 Hz gemäß IEC 247/50 bei 90°C | Verlustfaktor bei 50 Hz gemäß IEC 247/250 bei 90°C | Flammpunkt im offenen Tiegel gemäß ISO 2719 in °C | Wassergehalt in ppm |
|---|---|---|---|---|---|---|---|
| undotierte Ware ungetempert | 52 | 57,5 | $3,8 \cdot 10^{15}$ | 2,5 | 0,0002 | 305 | 45 |
| undotierte Ware getempert | 86 | 59,5 | $7,5 \cdot 10^{14}$ | 2,6 | 0,0002 | 304 | 18 |
| dotierte Ware ungetempert | 52 | 58,3 | $4,2 \cdot 10^{15}$ | 2,5 | 0,0002 | 306 | 47 |
| dotierte Ware getempert | 53 | 59,6 | $9,1 \cdot 10^{14}$ | 2,5 | 0,0002 | 306 | 20 |

Beispiel 5

In Analogie zu Beispiel 4 wurde in einem 1000 ml Becherglas mit einem Durchmesser von 100 mm 800 g einer mit 0,01 Gew.-% 1,4-Bis-(4-tert.-butylphenylamino)-anthrachinon dotierten Polydimethylsiloxan-Flüssigkeit gemäß IEC 10 B (Sec) 46 14 Tage bei 225°C getempert, anschließend die relevanten Werte an dieser Probe gemessen und mit den Daten der ungetemperten und auch der undotierten Ausgangsware verglichen. Die entsprechenden Ergebnisse sind in Tabelle 7 zusammengefaßt.

Tabelle 7

| | Viskosität bei 25°C gemäß ISO 3104 ($mm^2 \cdot s^{-1}$) | Durchschlagsspannung gemäß IEC 156 (kV) | Spez. Durchgangswiderstand gemäß IEC 247/93 (Ω.cm) bei 90°C | Dielektrizitätszahl bei 50 Hz gemäß IEC 247/50 bei 90°C | Verlustfaktor bei 50 Hz gemäß IEC 247/250 bei 90°C | Flammpunkt im offenen Tiegel gemäß ISO 2719 in °C | Wassergehalt in ppm |
|---|---|---|---|---|---|---|---|
| undotierte Ware ungetempert | 52 | 57,5 | $3{,}8 \cdot 10^{15}$ | 2,5 | 0,0002 | 305 | 45 |
| undotierte Ware getempert | 86 | 59,5 | $7{,}5 \cdot 10^{14}$ | 2,6 | 0,0002 | 304 | 18 |
| dotierte Ware ungetempert | 52 | 58,0 | $3{,}5 \cdot 10^{14}$ | 2,5 | 0,0002 | 302 | 13 |
| dotierte Ware getempert | 53 | 62,9 | $2{,}5 \cdot 10^{14}$ | 2,6 | 0,0002 | 314 | 17 |

Die Alterungsstabilität von Polyorganosiloxanen, insbesondere von Polydimethylsiloxanen läßt sich also durch die Zugabe der erfindungsgemäßen Anthrachinonverbindungen beträchtlich verbessern, ohne daß die dielektrischen Daten bei Isolierflüssigkeiten nennenswert verändert werden und ohne daß sich der Flammpunkt erniedrigt.

Patentansprüche

1. Organopolysiloxane mit verbesserter Alterungsstabilität, dadurch gekennzeichnet, daß sie einen Gehalt an substituierten Anthrachinonverbindungen aufweisen.

2. Organopolysiloxane nach Anspruch 1, dadurch gekennzeichnet, daß sie einen Gehalt von 0,001 bis 0,05 Gew.-% - bezogen auf die Gesamtmenge - an Anthrachinonverbindungen der allgemeinen Formel

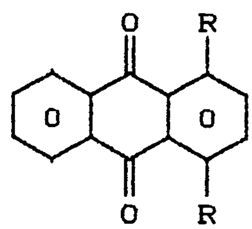

wobei R unabhängig voneinander für Wasserstoff, Aminogruppen und substituierte Aminogruppen stehen kann, wobei jedoch nicht beide R gleichzeitig Wasserstoff sein können, enthalten.

3. Verwendung von Organopolysiloxanen nach Anspruch 1 oder 2 als Isolierflüssigkeit in elektrischen Vorrichtungen.

0244617

Europäisches Patentamt

# EUROPÄISCHER RECHERCHENBERICHT

Nummer der Anmeldung

EP 87 10 4379

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 780 622 (GENERAL ELECTRIC) * Ansprüche 1,4-12; Seite 1, Zeilen 10-25; Seite 2, Zeilen 1-12; Seite 3, Zeilen 73-85 * | 1-3 | C 08 K 5/08<br>C 08 L 83/04<br>H 01 B 3/46<br>C 10 M 129/24 |
| X | US-A-4 229 976 (DOW CORNING) * Anspruch 1; Spalte 3, Zeilen 5-45 * | 1 | |
| A | US-A-4 540 503 (A.A. CAREY) * Ansprüche 1,2 * | 1 | |
| A | GB-A-1 409 476 (TORAY) * Anspruch 1; Seite 1, Zeilen 14-41 * | 1 | |
| | | | RECHERCHIERTE SACHGEBIETE (Int. Cl.4) |
| | | | C 08 K<br>C 08 L<br>H 01 B |

Der vorliegende Recherchenbericht wurde für alle Patentansprüche erstellt.

| Recherchenort | Abschlußdatum der Recherche | Prüfer |
|---|---|---|
| DEN HAAG | 08-07-1987 | DEPIJPER R.D.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument